# EUROPEAN PATENT SPECIFICATION

(11) **EP 0 518 703 B1**
(45) Date of publication and mention of the grant of the patent: **26.01.2000**
(21) Application number: 92305452.2
(22) Date of filing: 15.06.1992
(51) Int. Cl.: C08L 67/02, C08L 23/08, C08L 51/06, C08L 77/00

(54) **Sulfonated polyester resin compositions**
Mischungen sulfonierter Polyester
Compositions de résine de polyester sulfoné

(30) Priority: 14.06.1991 JP 16922991; 24.06.1991 JP 18015291
(43) Date of publication of application: 16.12.1992
(73) Proprietor: POLYPLASTICS CO. LTD., Chuo-Ku Osaka-shi Osaka 541 (JP)
(72) Inventor: Tajima, Yoshihisa, Shimizu-shi, Shizuoka (JP); Kawaguchi, Kuniaki, Numazu-shi, Shizuoka (JP); Nakane, Toshio, Fuji-shi, Shizuoka (JP)
(74) Representative: Tebbit, Antony Hugh Edward

(56) References cited:
- WO-A-91/08263
- US-A- 3 328 484
- US-A- 3 435 093
- US-A- 4 950 717
- US-A- 4 957 980
- CHEMICAL ABSTRACTS, vol. 74, no. 26, 28 June 1971, Columbus, Ohio, US; abstract no. 143201e, SHINOKI, YUKINORI ET AL 'Polyamide and polyester coposite fibers.' page 60 ;

## Description

### FIELD OF THE INVENTION

The present invention relates to a resin composition comprising a blend of a particular aromatic polyester resin with a particular olefin copolymer resin, said composition being capable of providing a molded article having good surface appearance and mechanical properties.

### DESCRIPTION OF THE RELATED ART

An aromatic polyester resin, a polyolefin resin and a polyamide resin are excellent in moldability arid have been used as a thermoplastic resin having mechanical properties, electrical properties and other properties above a certain level in very wide fields. Among them, an aromatic polyester resin and a polyamide resin are also excellent in chemical resistance and have been used as a representative engineering resin. The expansion of the field of utilization, however, has brought about an ever-increasing demand for an improvement in the performance of the resin.

Higher toughness, higher impact resistance, higher heat resistance and higher alkali resistance are frequently required of the aromatic polyester resin.

On the other hand, although olefin resins including polyethylene and polypropylene generally have a light weight and are excellent in chemical resistance and flexibility, they have a problem of lack of strength and rigidity, which frequently limits the applications of the olefin resins. Further, both resins are poor in affinity for each other when used alone, so that a problem occurs in the composite product of both resins, for example, a laminate film made through the co-extrusion of both resins, a laminate blow molding or the like due to a lack of the adhesion.

Blending of resins is considered useful for solving or reducing the problems of the respective resins.

For example, homogeneous blending of the aromatic polyester resin and the polyolefin resin is expected to make up for the drawbacks of the respective resins when used separately, and to improve the properties of the composite resin through an improvement in fusibility and bondability. However, even when the aromatic polyester resin and the polyolefin resin are blended and melt-kneaded with each other, the compatibility of the resins with each other is so poor that it is difficult to attain a homogeneous dispersion. In particular, in the case of an injection molded article, the vicinity of the surface layer has a laminar structure, severe peeling occurs at the surface, and mechanical properties are significantly reduced, which remarkably inhibits the practical value of the blend.

In order to attain a homogeneous dispersion through an improvement in the compatibility of the polyester resin with the polyolefin resin, many proposals have been made on the use of a modified polyolefin copolymer having, besides a polyolefin resin, a comonomer component introduced therein for the purpose of improving the properties through an enhancement in the compatibility of the polyolefin resin with the polyester resin. Although the effect can be observed to some extent, it is not satisfactory for all purposes and, in many cases, a further improvement in the dispersibility and properties are required in the art.

### OBJECT OF THE INVENTION

An object of the present invention is to reduce or eliminate the drawbacks due to poor dispersibility of an aromatic polyester resin and a polyolefin resin in each other in the case of blending of both the components and to provide a composition capable of providing a molded article free from the peeling of the surface layer, having good mechanical properties, and having good bondability.

In view of the above-described problems, the present inventors have made extensive studies with a view to improving the form of dispersion in a polymer blend of an aromatic polyester resin with a polyolefin resin and, as a result, have found that the use of an aromatic polyester resin (A) having a particular metal-sulfonate-containing unit introduced thereinto enables the dispersibility of the two resins to be further improved, so that it becomes possible to produce a composition capable of providing a molded article having a smooth surface free from peeling of a surface layer and excellent mechanical properties, which has led to the completion of the present invention.

### SUMMARY OF THE INVENTION

According to the present invention there is provided a polyester resin composition comprising or consisting essentially of a blend of:
(A) 2 to 98% by weight, based on the total amount of resin components (A), (B-I) and (C), of an aromatic polyester copolymer containing a metal sulfonate group produced by subjecting (a) an aromatic dicarboxylic acid or its ester forming derivative, (b) a diol compound or its ester forming derivative and (c) an ester forming compound containing a metal sulfonate group to a polycondensation reaction,
(B-I) 2 to 98% by weight, based on the total amount of resin components (A), (B-I) and (C), of an olefin copolymer produced by copolymerizing an olefin with at least one of an α,β-unsaturated carboxylic acid or its derivative and vinyl alcohol or its ester, and, optionally,
(C) 0 to 96% by weight, based on the total amount of resin components (A), (B-1) and (C), of an aromatic polyester resin.

This polyester resin composition is referred to as "composition I", hereinafter.

The invention includes molded articles produced by injection molding a resin of composition I.

### DETAILED DESCRIPTION OF THE INVENTION

Individual components to be used in the present invention will now be described.

The aromatic polyester resin (A) containing a metal sulfonate group to be used in the present invention is a saturated polyester resin produced by polycondensing various dicarboxylic acids or their ester forming derivatives (a) with various diols or their ester forming derivatives (b) in the presence of an ester forming monomer (c) containing a metal sulfonate group which will be described later.

The dicarboxylic acid or its ester forming derivative of the monomer (a) going to form the component (A) may be at least one member selected from those mainly composed of terephthalic acid, isophthalic acid, 2,6- or 2,7-naphthalenedicarboxylic acid and their lower alcohol esters and further comprising 4,4-diphenyldicarboxylic acid, adipic acid, sebacic acid, cyclohexanedicarboxylic acid and their lower alcohol esters.

The diol component of the monomer (b) going to form the component (A) is preferably at least one member selected from among diols such as ethylene glycol, 1,3-propanediol, 1,4-butanediol, 1,4-cyclohexanedimethanol, polyoxyethylene glycol, polyoxypropylene glycol and polyoxybutylene glycol, and their ester forming derivatives.

The component (A) may be a polyester copolymer having a crosslinking or branched structure produced by using, as its constituent monomer (a) or (b), trifunctional or higher ester forming compounds, for example, trimesic acid, trimellitic acid, pyromellitic acid or the like or their ester forming derivative as the component (a) in combination with a small amount of glycerin, trimethylolpropane, pentaerythritol or the like as the component (b).

The polyester as the component (A) to be used in the present invention is a polyester having a metal sulfonate group produced by further adding an ester forming compound having a metal sulfonate group as the comonomer or reaction component (c) to the abovedescribed components and subjecting the mixture to polycondensation.

The monomer component (c) to be added for this purpose is preferably an aromatic carboxylic acid having a metal sulfonate group or its lower alkyl ester or alcohol represented by the following general formulae (I) and/or II:

(XOCO)ₘ -Ar - (SO₃M)ₙ (I)

(HORO)ₘ -Ar- (SO₃M)ₙ (II)

wherein -Ar- stands for a benzene ring or a naphthalene ring; X stands for a hydrogen atom or a lower alkyl group; m and n are each 1 or 2; M stands for an alkali metal selected from among lithium, sodium and potassium, provided that when n is 2, the M's may be the same or different; and R stands for a divalent group selected from among -CH₂CH₂-, -CH(CH₃)CH₂-, -CH₂CH(CH₃)- and _CH₂CH₂0CH₂CH₂-.

In the polycondensation reaction of the polyester as the component (A), the monomer (c) may be added at the same time with the components (a) and (b). Alternatively, it may be added at any time before the completion of the polycondensation reaction. However, the addition is preferably conducted in an early stage as much as possible. It is particularly preferred to add the component (c) before the esterification or transesterification of the components (a) and (b).

When the compound (e) having a metal sulfonate group is represented by the formula (I) or (II) wherein m is 1, since the number of esterifying functional groups is one, it is introduced as a terminal group of the polyester (A). On the other hand, when the compound (c) is difunctional, that is, m is 2, a copolymer wherein the functional groups have been randomly introduced as a comonomer component into the main chain is obtained. In the present invention, the polyester as the component (A) may be any of them. Further, the monomer as the component (c) may comprise a combination of two monomers represented by the formulae (I) and (II).

The preferred amount of the unit (c) going to form the component (A) is 0.01 to 15% by mole, preferably 0.1 to 10% by mole based on the whole ester constituent unit. The content of the unit (c) in the polyester (A) can be regulated by regulating the amount of addition of the monomer represented by the formula (1) or (II) depending upon the purpose in view.

A composition having optimal properties can be produced by properly changing the content of the unit (c) in the component (A) according to the purpose of the invention or to the kind and amount of the following components (B-I), (B-II) and (C) within the above-described respective ranges.

Ensuring that the content of the unit (c) in the component (A) is lat least 0.01% by mole, tends to promote the effect of improving the compatibility and dispersibility which is a main purpose of the present invention. On the other hand, ensuring that the content does not exceed 15% by mole, facilitates the production of a polymer having a high degree of polymerization. This has a beneficial effect on the mechanical properties of the composition.

The most typical example of the polyester as the component (A) is a polyester (co)polymer containing aromatic ester forming units having sodium sulfonate groups and mainly composed of units of ethylene terephthalate, butylene terephthalate, butylene terephthalate isophthalate, cyclohexanedimethylene terephthalate, butylene 2,6-naphthalate, butylene 2,7-naphthalate or the like.

The polyolefin resin as the component (B-I) to be used in the present invention is an olefin copolymer produced by copolymerizing an olefin with at least one of an α,β-unsaturated carboxylic acid or its derivative and vinyl alcohol or its ester.

The olefin going to form the olefin copolymer preferably comprises at least one member selected from α-olefins, for example, ethylene, propylene, butene-1, hexene-1, 4-methylbutene-1, 4-methylpentene-1, etc., particularly ethylene, propylene and butene-1.

The α,β-unsaturated carboxylic acid or its derivative as the comonomer component is, for example, acrylic acid, methacrylic acid, ethacrylic acid, maleic acid, fumaric acid or their metal salt (the group I or II metal as the metal) or alkyl ester, glycidyl ester, anhydride, imide or the like.

Further, it may be vinyl alcohol or its ester such as vinyl acetate.

At least one of the above-described preferred comonomer components may be introduced as a component of copolymerization (including graft copolymerization and block copolymerization) into a polyolefin polymer to constitute the component (B-I).

Further, the component (B-I) may be a polyolefin copolymer or a polyolefin elastomer mainly composed of the above-described copolymer and further copolymerized with other vinyl monomer (for example, styrene, butadiene, acrylonitrile or the like). Further, use may be made of any of copolymers, terpolymers and block polymers containing a small amount of a crosslinking agent or other modifier. Further, the polyolefin resin may have not only a linear molecular structure but also a branched or crosslinked structure. There is no particular limitation on the degree of polymerization as long as the polymer is moldable. It is also possible to use the above-described olefin copolymers in a combination of two or more of them.

Particularly preferred examples of the olefin copolymer (B-I) include a copolymer of ethylene with a metal salt of methacrylic acid or acrylic acid (the metal may be, for example, lithium, sodium, potassium, calcium, magnesium or zinc), a copolymer of ethylene with methacrylic acid or acrylic acid, a copolymer of propylene with maleic acid or maleic anhydride and a copolymer of ethylene with vinyl acetate or its saponificate.

It is also possible to further incorporate, besides the polyester (A) containing a metal sulfonate group, a general polyester resin (C) to the polyester composition of the present invention although the component (C) is not always an indispensable component.

All the polyesters consisting of the monomers (a) and (b) alone in the component (A) may be generally used as the polyester resin as the component (C), and representative examples thereof include a polyethylene terephthalate resin, a polybutylene terephthalate resin, a polycyclohexanedimethylene terephthalate resin, a copolymer resin mainly composed of these resins, or a thermoplastic elastomer copolymerized, with an oxyalkylene glycol having a high molecular weight and a liquid crystalline polyester resin.

The present invention provides the compositions I and II.

In the composition I of the present invention, the proportions of the components (A), (B-I) and (C) are respectively 2 to 98% by weight, 2 to 98% by weight and 0 to 96% by weight based on 100 parts by weight in total of the components (A), (B-1) and (C). Among others, the total amount of the components (A) and (C) is preferably 5 to 95% by weight while the amount of the component (B-I) is preferably 5 to 95% by weight. When the amount of the component (B-I) is excessively small, no effect of improving the mechanical properties, such as impact resistance, of the polyester resin composition can be attained. On the other hand, when the amount is excessively large, properties inherent in the polyester resin are lost and. in particular, the rigidity is lost unfavorably. The amount of blending of the component (B-I) is particularly preferably 5 to 50% by weight. Although the ratio of the component (A) to the component (C) varies depending upon the content of the metal sulfonate unit in the component (A), at least the component (A) should be 2% by weight or more, preferably 5% by weight or more based on the resin component from the viewpoint of an improvement in the dispersibility. When the content of the metal sulfonate unit in the component (A) falls within the above-described range and is relatively low, it is preferred to reduce the amount of incorporation of the component (C). On the other hand-, when the content of the metal sulfonate unit falls within the above-described range and is relatively large, it is possible to reduce the component (A) and increase the component (C). In this case, the molecular weight of the component (A) may be relatively low.

As described above, when the general aromatic polyester resin (C) is merely melt-kneaded with the polyolefin resin (B-I), not only is the dispersion so poor that the minor component resin phase exists as large particles and appears as a striped or lamellar phase separation structure close to the surface of an injection molded article but also peeling of the surface layer is liable to occur due to friction. The reason for this is believed to be as follows. The aromatic polyester resin (C) and the polyolefin resin (B-I) phase are deformed due to a high shear force caused around the surface layer in the course of injection molding to form a layer structure, and the peeling of the surface layer occurs due to poor affinity and adhesion between the aromatic polyester resin (C) phase and the polyolefin resin (B-I) phase. On the other hand, it may be understood that the use or combined use of an aromatic polyester (A) containing a metal sulfonate group improves the dispersibility of each resin component, enables dense and homogeneous dispersion to be attained, so preventing the formation of a layer structure of distinct phases and improving the adhesion between the components, so that a molded article having a good surface appearance can be produced. The improvement in the dispersion can be supported by very fine and homogeneous dispersion of a minor component when the section of the molded article of the composition according to the present invention is observed under an electron microscope (see Examples).

Conventional additives, for example, lubricating agents, slip additives, nucleating agents, dyes and pigments, release agents, antioxidants, heat stabilizers, weather (light) stabilizers, hydrolysis stabilizers, inorganic or organic reinforcements or fillers and other thermoplastic resins may be incorporated in the resin compositions of the present invention for the purpose of Imparting desired properties in such an amount as will have no adverse effect on the purpose in view.

The compositions of the present invention can be produced by various-known processes. However, it is preferred to conduct at least heat melting in the presence of two components according to the present invention, that is, the aromatic polyester resin (A) and the polyolefin resin (B-I), and further the component (C) according to need, followed by kneading for 30 sec or more. In this case, other components as well may be simultaneously incorporated. Alternatively, they may be separately incorporated. More specifically, after individual components have been subjected to homogeneous mixing by means of a kneader such as a tumbler or a Henschel mixer, the mixture may be fed into a single screw extruder or a twin screw extruder where melt kneading is conducted. The kneaded product may be pelletized and then molded. Alternatively, it may be directly molded.

The melt kneading may be preferably conducted at a melting temperature under a shear rate of 40 sec⁻¹ or more. The shear rate is particularly preferably 100 to 500 sec⁻¹.

The treatment temperature is 5 to 100°C above the melting temperature of the resin component, particularly preferably 10 to 60°C above the melting point. When the treatment temperature is excessively high, decomposition or abnormal reaction occurs unfavorably.

The melt kneading time is desirably at least 30 sec to 15 min, preferably 1 to 10 min.

The composition I of the present invention has a structure wherein an aromatic polyester resin and a polyolefin resin are homogeneously and finely dispersed in each other, can provide a molded article having reduced peeling of the surface layer derived from poor dispersibility observed in the prior art and having a smooth surface, excellent mechanical properties and the bondability in the production of a composite molded article, so that it can be expected to find many applications.

### BRIEF DESCRIPTION OF THE DRAWINGS

Fig. 1 is an electron photomicrograph showing a representative (Example 2) particle structure (dispersed state) of the composition I of the present invention.

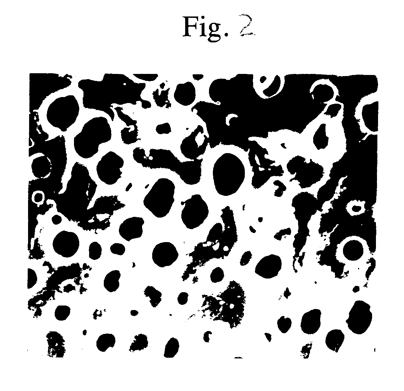

Fig. 2 is an electron photomicrograph showing a representative (Comparative Example 3) particle structure (dispersed state) of the conventional composition outside the scope of the present invention.

### EXAMPLES

The present invention will now be described in more detail with reference to the following Examples, though it is not limited to these Examples only.

### [COMPOSITION I]

Evaluation and measurement were conducted by the following methods.

### Evaluation of dispersibility of resin:

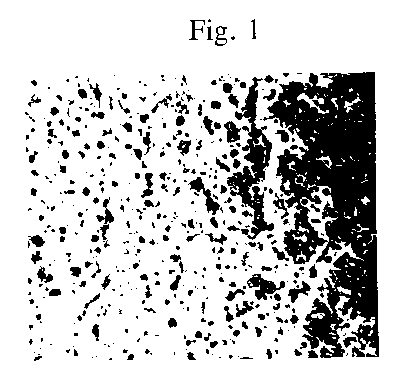

When the polyolefin resin (B-I) was a minor component, the state of dispersion (average particle diameter in the case of particle dispersion) of the polyolefin resin (B-I) was evaluated by breaking pellets in liquid nitrogen, placing the broken pellets in a xylene solution, refluxing the mixture at 130°C for 12 hours to elute the polyolefin resin (B-I) and observing the resultant holes under an electron microscope. The denser the dispersion (the smaller the average particle diameter), the better the dispersibility of the polyolefin resin (B-I). A representative state of particle dispersion (Example 2) according to the present invention is shown in Fig. 1. The state of particle dispersion (Comparative Example 3) corresponding to this case and outside the scope of the present invention is shown in Fig. 3.

When the polyester component (A + C) was a minor component, the pellets were crushed or cut and treated in a 1 N aqueous NaOH solution at 60°C for 24 hours to decompose and elute the polyester, and the resultant holes were evaluated in the same manner as that described above.

### Tensile strength and elongation:

The tensile strength and elongation were measured according to ASTM D638.

### Notched Izod impact value:

The notched Izod impact value was measured according to ASTM D256.

### Surface peeling test:

A Scotch™ tape was adhered to the gate of a tensile specimen and peeled off to determine whether or not peeling occurred.

### Fusibility:

A 1 mm-thick film was prepared at 250°C by means of a pressing machine and put on a mating resin film specified in the Table, and they were fused to each other at 250°C for 2 min under a pressure of 50 kg/cm² (4.9MPa) by means of the pressing machine. The laminate was rapidly cooled to give a sample having a thickness of 1 mm, which was then subjected to evaluation of the fusibility according to JIS C6481.

### Production Example of Polyester Copolymer (A)

A reaction vessel provided with an agitator and a distillate tube was charged with (a) dimethylterephthalate, (b) 1,4-butanediol and (c) sodium dimethyl 5-sulfoisophthalate (in an amount of 0.1% by mole, 1% by mole or 5% by mole based on the total amount of the components (a) + (c)) and titanium tetrabutoxide as a catalyst and air in the reaction system was sufficiently purged with nitrogen. The temperature of the system was raised to almost complete transesterification until the temperature reached 240°C (90% or more of the theoretical amount of methanol was distilled). The reaction system was then evacuated, and the polycondensation reaction was continued under 0.1 Torr (13 Pa) for 2.5 hours to give three kinds of modified PBT copolymers containing a sodium-sulfonate-containing isophthalic acid residue in respective amounts of 0.1% by mole, 1% by mole and 5% by mole (A-1, A-2 and A-3).

A modified PET (sodium sulfonate content: 1% by mole) (A-4) was prepared in the same manner as that used in the preparation of (A-2), except that ethylene glycol was used as the component (b).

Polycondensation was conducted in the same manner as that described in the preparation of (A-2), except that sodium p-dihydroxyethoxyphenylsulfonate was used as the component (c) in an amount of 1% by mole based on the component (a) (A-5).

### EXAMPLES 1 TO 5

According to the formulations specified in Table 1, (A) a polybutylene terephthalate copolyester resin copolymerized with a sodium 5-sulfoisophthalate (SIP) component in an amount of 0.1% by mole, 1.0% by mole or 5% by mole (A-1, A-2 and A-3), (B-I) a copolymer of ethylene with zinc methacrylate (Himilan™ manufactured by Du Pont-Mitsui Polychemical Co., Ltd.) (B-1) and, if necessary, (C) polybutylene terephthalate (PBT) (manufactured by Polyplastics Co., Ltd.) were mixed with each other in proportions specified in Table 1. The mixture was melt-kneaded by means of a 30-mm twin screw extruder at a preset temperature of 245°C and a speed of rotation of a screw of 80 rpm and then pelletized. Subsequently, a specimen was prepared from the pellet by means of an injection molding machine, and properties were evaluated. The results are given in Table 1.

### COMPARATIVE EXAMPLES 1 TO 3

For comparison, a composition consisting of a modified PBT (A) alone, a composition consisting of polybutylene terephthalate (PBT) (C) alone and a composition comprising a two-component system of the components (B-I) and (C) free from the modified PBT (A) were evaluated in the same manner as that described In the above-described Examples. The results are also given in Table 1.

### EXAMPLES 6 TO 11 AND COMPARATIVE EXAMPLES 4 TO 8

Molded pieces were prepared and evaluated in the same manner as that used in the above-described Examples 1 to 5 and Comparative Examples 1 to 3, except that the amounts of blending of the components (A), (B-I) and (C) were varied as specified in Table 2. The results are given in Table 2.

### EXAMPLES 12 TO 16 AND COMPARATIVE EXAMPLES 9 TO 12

Compositions were prepared, molded and evaluated in the same manner as that described above, except that, in one case, the component (A) was changed to a modified polyethylene terephthalate resin (PET) (SIP: 1% by mole) (A-4) and, in another case, a copolymer of ethylene with vinyl alcohol (Kuraray Eval™ manufactured by Kuraray Co., Ltd;) (B-2), a copolymer of ethylene with ethyl acrylate copolymer (manufactured by Nippon Unicar Co., Ltd.) (B-3) or a maleic-anhydride-modified polypropylene (Sumitomo Noblen™ manufactured by Sumitomo Chemical Co., Ltd.) (B-4) was used as the component (B-I). The results are given in Table 3.

### EXAMPLES 17 AND 18

Compositions were prepared, molded and evaluated in the same manner as that described above, except that a copolymer containing 1% by mole of sodium p-dihydroxyethoxyphenylsulfonate (HEPS) (A-5) was used as the component (A). The results are given in Table 4.

**Table 1**

| | | Unit | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|---|
| (A) | SIP-modified PBT | pt.wt. | 75 (A-1) | 75 (A-2) | 75 (A-3) | 10 (A-2) | 10 (A-3) | - | 100 (A-2) | - |
| | SIP content | mol% | 0.1 | 1 | 5 | 1 | 5 | - | 1 | - |
| (B-I) B-1 | | pt.wt. | 25 | 25 | 25 | 25 | 25 | - | - | 25 |
| (C) PBT | | pt.wt. | - | - | - | 65 | 65 | 100 | - | 75 |
| dispersed particle diameter | | µm | 0.5 | 0.3 | 0.1 | 0.6 | 0.5 | - | - | 2.0 |
| tensile strength | | kg/cm² | 498 | 491 | 496 | 495 | 493 | 567 | 560 | 486 |
| tensile elongation | | % | 105 | not broken | not broken | 130 | 130 | not broken | 47 | 24 |
| notched Izod Impact value | | kg·cm/cm | 11.2 | 16.5 | 8.5 | 15.1 | 10.8 | 3.8 | 2.6 | 4.1 |
| surface layer peeling | | | free | free | free | free | free | free | free | peeled |
| fusibility (to PBT) | | kg/cm | >4 | >4 | >4 | >4 | >4 | >4 | >4 | >4 |
| fusibility (to polyethylene) | | kg/cm | 1.5 | 2.2 | 3.5 | 1.7 | 1.7 | 0.3 | 0.4 | 0.5 |

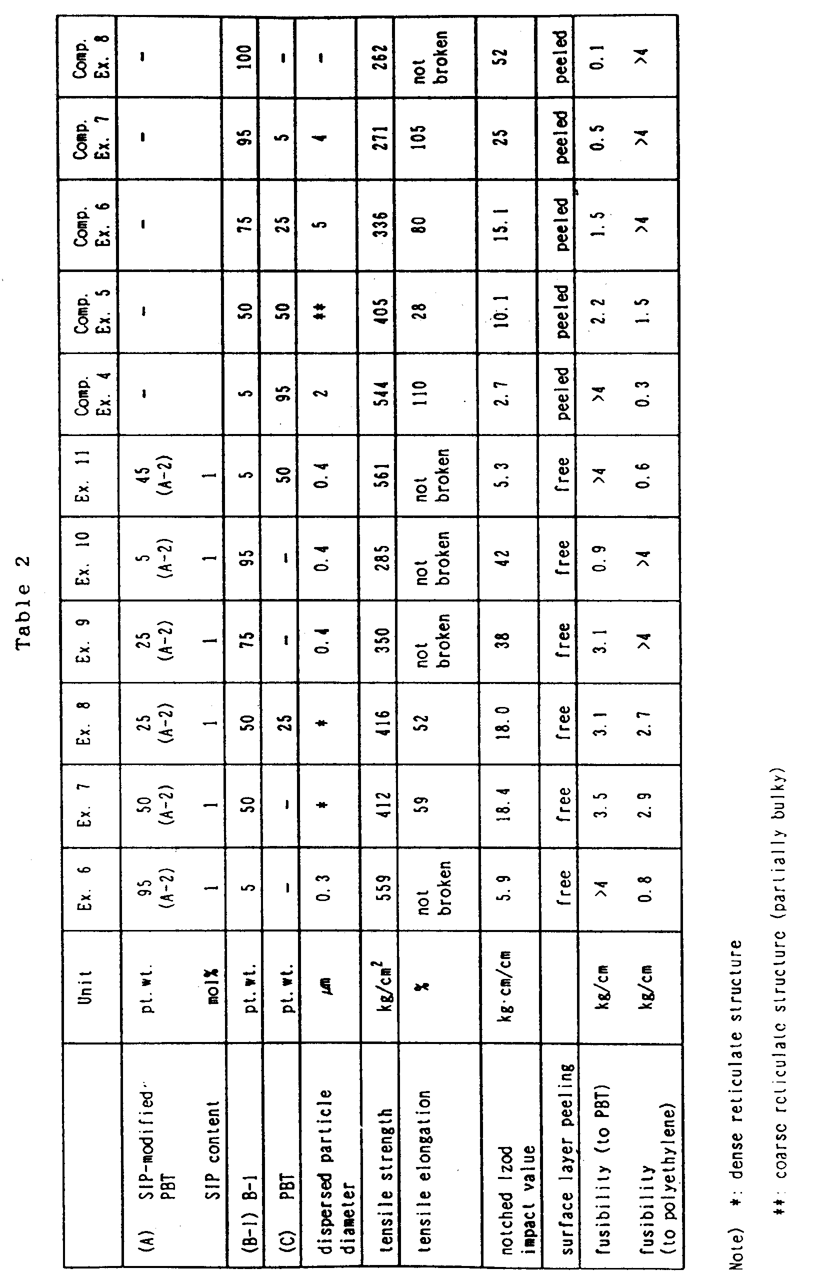

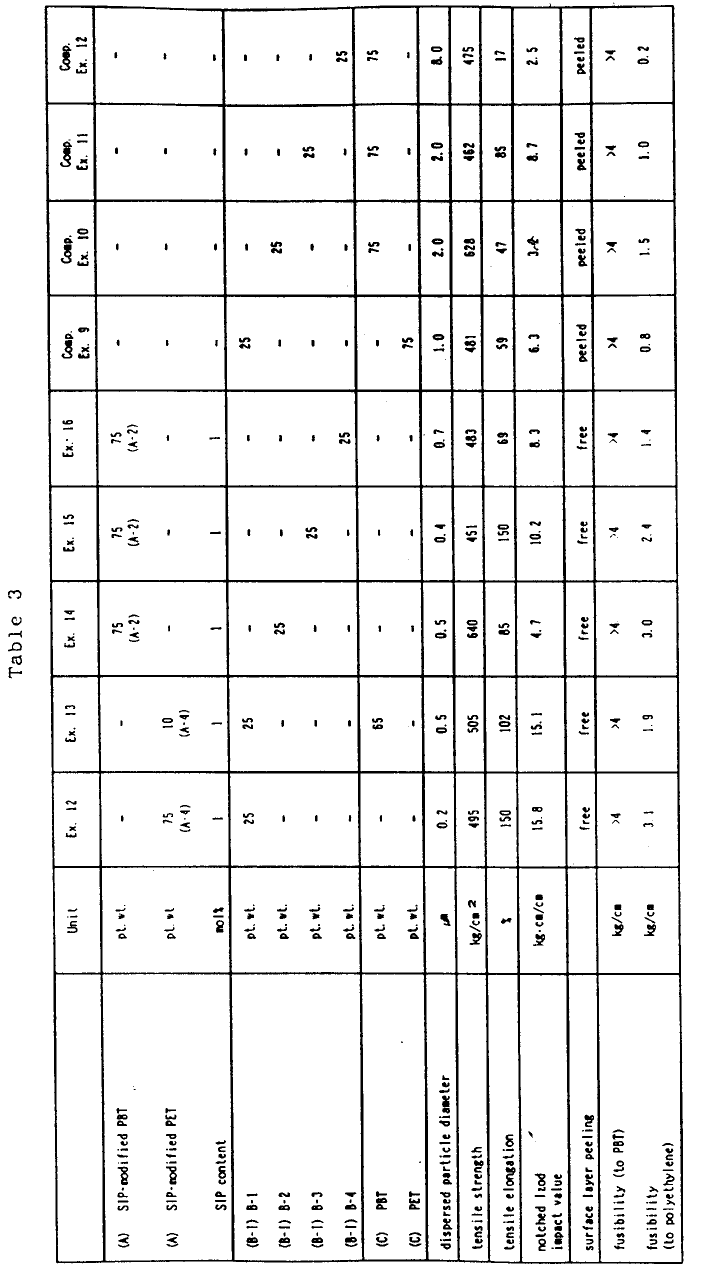

**Table 4**

| | | Unit | Ex. 17 | Ex. 18 |
|---|---|---|---|---|
| (A) | HEPS-modified PBT | pt.wt. | 75 (A-5) | 10 (A-5) |
| | HEPS content | mol% | 1 | 1 |
| (B-I) B-1 | | pt.wt. | 25 | 25 |
| (C) PBT | | pt.wt. | - | 65 |
| dispersed particle diameter | | µm | 0.3 | 0.5 |
| tensile strength | | kg/cm² | 497 | 498 |
| tensile elongation | | % | 150 | 103 |
| notched Izod impact value | | kg·cm/cm | 10.3 | 9.6 |
| surface peeling | | | free | free |
| fusibility (to PBT) | | kg/cm | >4 | >4 |
| fusibility (to polyethylene) | | kg/cm | 1.5 | 1.5 |

## Claims

1. A polyester resin composition comprising a blend of:
(A) 2 to 98% by weight, based on the total amount of resin components (A), (B-I) and (C), of an aromatic polyester copolymer containing a metal sulfonate group produced by subjecting (a) an aromatic dicarboxylic acid or its ester forming derivative, (b) a diol compound or its ester forming derivative and (c) an ester forming compound containing a metal sulfonate group to a polycondensation reaction,
(B-I) 2 to 98% by weight, based on the total amount of resin components (A), (B-I) and (C), of an olefin copolymer produced by copolymerising an olefin with at least one of an α,β-unsaturated carboxylic acid or its derivative and vinyl alcohol or its ester, and, optionally,
(C) 0 to 96% by weight, based on the total amount of resin components (A), (B-I) and (C), of an aromatic polyester resin.

2. The polyester resin composition according to claim 1, wherein the metal-sulfonate-containing ester unit (c) going to form the component (A) comprises a compound represented by the following general formulae (I) and/or (II) and is introduced into the component (A) in an amount in the range of from 0.01 to 15% by mole based on the whole ester unit constituting the component (A):
(XOCO)ₘ-Ar-(SO₃M)ₙ (I)
(HORO)ₘ-Ar-(S0₃M)ₙ (II)
wherein -Ar- stands for a benzene ring or a naphthalene ring; X stands for a hydrogen atom or a lower alkyl group; m and n are each 1 or 2; M stands for an alkali metal selected from among lithium, sodium and potassium, provided that when n is 2, the M's may be the same or different; and R stands for a divalent group selected from among -CH₂CH₂-, -CH(CH₃)CH₂-, -CH₂CH(CH₃)-and -CH₂CH₂0CH₂CH₂-.

3. A molded article produced by molding a polyester resin composition according to claim 1.

## Patentansprüche

1. Polyesterharz-Zusammensetzung, umfassend ein Blend aus:
(A) 2 bis 98 Gew.-%, bezogen auf die Gesamtmenge der Harzkomponenten (A), (B-I) und (C), eines aromatischen, eine Metallsulfonatgruppe enthaltenden Polyester-Copolymers, das hergestellt wird, indem (a) eine aromatische Dicarbonsäure oder ein esterbildendes Derivat davon, (b) eine Diolverbindung oder ein esterbildendes Derivat davon und (c) eine esterbildende, eine Metallsulfonatgruppe enthaltende Verbindung einer Polykondensationsreaktion unterzogen werden,
(B-I) 2 bis 98 Gew.-%, bezogen auf die Gesamtmenge der Harzkomponenten (A), (B-I) und (C), eines Olefin-Copolymers, das hergestellt wird, indem ein Olefin mit wenigstens entweder einer α,β-ungesättigten Carbonsäure oder einem Derivat davon und Vinylalkohol oder einem Ester davon copolymerisiert wird, und gegebenenfalls
(C) 0 bis 96 Gew.-%, bezogen auf die Gesamtmenge der Harzkomponenten (A), (B-I) und (C), eines aromatischen Polyesterharzes.

2. Polyesterharz-Zusammensetzung nach Anspruch 1, wobei die ein Metallsulfonat enthaltende Estereinheit (c), die zur Bildung von Komponente (A) dient, eine Verbindung umfaßt, die durch die folgenden allgemeinen Formeln (I) und/oder (II) dargestellt wird und in einer Menge im Bereich von 0,01 bis 15 mol-%, bezogen auf die gesamte, Komponente (A) bildende Estereinheit, in Komponente (A) eingeführt wird:
(XOCO)ₘ-Ar-(SO₃M)ₙ (I)
(HORO)ₘ-Ar-(SO₃M)ₙ (II),
wobei -Ar- für einen Benzolring oder einen Naphthalinring steht; X für ein Wasserstoffatom oder eine Niederalkylgruppe steht; m und n jeweils 1 oder 2 sind; M für ein aus Lithium, Natrium und Kalium ausgewähltes Alkalimetall steht, mit der Maßgabe, daß, wenn n gleich 2 ist, die M gleich oder verschieden sein können, und R für eine zweiwertige Gruppe steht, die aus -CH₂CH₂-, -CH(CH₃)CH₂-, -CH₂CH(CH₃)- und -CH₂CH₂OCH₂CH₂- ausgewählt ist.

3. Formteil, hergestellt durch das Formen einer Polyesterharz-Zusammensetzung nach Anspruch 1.

## Revendications

1. Une composition de résine polyester comprenant un mélange de :
(A) 2 à 98 % en poids, par rapport à la quantité totale des composants résineux (A), (B-I) et (C), d'un copolymère polyester aromatique contenant un groupe sulfonate de métal, produit en soumettant à une réaction de polycondensation (a) un acide dicarboxylique aromatique ou un dérivé formateur d'ester de celui-ci, (b) un diol ou un dérivé formateur d'ester de celui-ci et (c) un composé formateur d'ester contenant un groupe sulfonate de métal,
(B-I) 2 à 98 % en poids, par rapport à la quantité totale des composants résineux (A), (B-I) et (C), d'un copolymère oléfinique produit en copolymérisant une oléfine avec au moins un acide carboxylique insaturé en α,β ou un dérivé de celui-ci et de l'alcool vinylique ou un ester de celui-ci, et, facultativement,
(C) 0 à 96 % en poids, par rapport à la quantité totale des composants résineux (A), (B-I) et (C), d'une résine polyester aromatique.

2. La composition de résine polyester selon la revendication 1, dans laquelle le motif ester contenant un sulfonate de métal (c) devant former le composant (A) comprend un composé représenté par la formule générale (I) et/ou (II) suivante et est introduit dans le composant (A) en une quantité comprise dans l'intervalle de 0,01 à 15 % en moles par rapport à la totalité des motifs esters qui constituent le composant (A)
(XOCO)ₘ-Ar-(SO₃M)ₙ (I)
(HORO)ₘ-Ar-(SO₃M)ₙ (II)
où -Ar- représente un noyau benzénique ou un noyau naphtalénique ; X représente un atome d'hydrogène ou un groupe alkyle inférieur ; m et n sont chacun 1 ou 2 ; M représente un métal alcalin choisi parmi le lithium, le sodium et le potassium, étant entendu que si n est 2, les M peuvent être identiques ou différents ; et R représente un groupe divalent choisi parmi -CH₂CH₂-, -CH(CH₃)CH₂-, -CH₂CH(CH₃)- et -CH₂CH₂OCH₂CH₂-.

3. Un article moulé produit en moulant une composition de résine polyester selon la revendication 1.
